# EUROPÄISCHE PATENTANMELDUNG

(11) **EP 1 148 277 A2**
(43) Veröffentlichungstag der Anmeldung: **24.10.2001**
(21) Anmeldenummer: 01104649.7
(22) Anmeldetag: 23.02.2001
(51) Int. Cl.: F16J 15/34

(54) **Verfahren und Vorrichtung zur Reduzierung der Oil-Cake-Bildung bei Öl enthaltenden Geräten**

(30) Priorität: 26.02.2000 DE 10020407; 29.08.2000 DE 10042463
(71) Anmelder: S.I.T Schiffs-& Industrie Technik GmbH, 22525 Hamburg (DE)
(72) Erfinder: Stache, Egon, 22880 Wedel (DE)
(74) Vertreter: Castell, Klaus, Dr.-Ing.

(57) **Zusammenfassung**

Bei einem Verfahren zur Reduzierung der Oil-Cake-Bildung bei Öl enthaltenden Geräten, bei denen sich im Öl wenigstens eine unerwünschte Zone erhöhter Temperatur ausbilden kann, wird das Öl in der Zone erhöhter Temperatur aktiv verwirbelt. Vorrichtungsmäßig wird dies durch Mittel zur aktiven Verwirbelung erreicht. Vorteilhafterweise sind auf der Achse oder Welle (12) befestigbare Bauelemente (22) vorgesehen, die im Betrieb eine Verwirbelung des die Achse oder Welle (12) umströmenden Öls bewirken.

## Beschreibung

Die Erfindung betrifft ein Verfahren und eine Vorrichtung zur Reduzierung der Oil-Cake-Bildung bei Öl enthaltenden Geräten, bei denen sich im Öl wenigstens eine unerwünschte Zone erhöhter Temperatur ausbilden kann.

Bei verschiedenem Öl, insbesondere Schweröl enthaltenden Geräten, wie Pumpen und insbesondere Brennstoffbehandlungsgeräten (sogenannte "Fuel Conditionern") besteht das Problem, daß sich im Öl unerwünschte Zonen erhöhter Temperatur ausbilden können, die bewirken, daß das Öl vercrackt und sich ein sogenannter Ölkuchen oder Oil-Cake bildet. Eine solche unerwünschte Zone erhöhter Temperatur entsteht z.B. regelmäßig im Bereich von Gleitringdichtungen, bei denen ein Laufring gegen einen Festring gedrückt wird und sich die Ringe im Betrieb durch die Reibung erwärmen. Dabei dient eine solche Gleitringdichtung z.B. dazu, die Öffnung, an der eine Antriebswelle in das Gehäuse einer Pumpe oder dergleichen eintritt, gegen den Austritt von Öl aus dem Gehäuse abzudichten.

Der vergleichsweise feste Oil-Cake wächst im Laufe der Zeit an und kann z.B. in eine mechanische Dichtung wie die genannte Gleitringdichtung eindringen, was einen erhöhten Verschleiß der Dichtung bedingt. Störungen im Betrieb sowie Verölungen und starke Verschmutzungen im Umgebungsbereich insbesondere Schweröl führender Anlagen auf Grund der Bildung von Oil-Cake sind keine Seltenheit.

Davon ausgehend liegt der Erfindung die Aufgabe zugrunde, ein Verfahren und eine Vorrichtung anzugeben, mittels welcher die Bildung von Oil-Cake stark reduziert oder sogar gänzlich verhindert werden kann. Zudem soll eine entsprechende Vorrichtung auch bei bereits vorhandenen ölführenden Geräten und Anlagen leicht nachrüstbar sein.

Die Aufgabe wird zum einen gelöst von einem Verfahren der eingangs genannten Art, bei welchem das Öl in der Zone erhöhter Temperatur aktiv verwirbelt wird. Dabei beruht die Erfindung auf der überraschenden Erkenntnis, daß eine aktive Verwirbelung des Öls in der Zone erhöhter Temperatur, in der es beim Betrieb der hier in Frage stehenden Geräte schon auf Grund thermischer Unterschiede, insbesondere aber auf Grund von Relativbewegungen von Bauteilen innerhalb des jeweiligen Gerätes immer zu einer gewissen Bewegung des Öls kommt, die Oil-Cake-Bildung weitgehend reduzieren und teilweise sogar ganz verhindern kann. Dabei hat sich überraschenderweise auch gezeigt, daß das erfindungsgemäße Verfahren bei den meisten der für eine Anwendung des Verfahrens in Frage kommenden Geräten mit verhältnismäßig geringem Aufwand realisiert werden kann.

Das Verfahren hat dabei nicht nur den wirtschaftlichen Vorteil, daß die Standzeiten von Bauteilen, die üblicherweise durch Oil-Cake-Bildung schnell verschleißen, stark erhöht werden kann, sondern es hat auch den ökologischen Vorteil, daß bei vielen Anwendungsfällen das vorzeitige Undichtwerden von Dichtungen, insbesondere von Gleitringdichtungen, die normalerweise in bestimmten Wartungsintervallen regelmäßig ausgetauscht werden, verhindert und eine Umweltbelastung durch austretendes Öl vermieden werden kann.

Bei einer bevorzugten Durchführungsform des Verfahrens ist vorgesehen, daß zur Verwirbelung des Öls mechanische Bauelemente zumindest partiell durch die Zone erhöhter Temperatur geführt werden. Dabei können zur Bewegung der Bauelemente durch die Zone erhöhter Temperatur vorteilhaft ohnehin in dem jeweiligen Gerät ausgeführte Bewegungen genutzt werden. Insbesondere kann die Bewegung einer Gleitringdichtung oder die Bewegung einer Achse oder Welle direkt oder indirekt zur Verwirbelung genutzt werden. Dabei entspräche es einer direkten Nutzung im Sinne der Erfindung, wenn an oder auf den bewegten Teilen entsprechende, das Öl verwirbelnde Bauelemente befestigt würden; einer indirekten Nutzung entpräche es, wenn die Bewegungsenergie zum Antrieb entsprechender, die Verwirbelung bewirkender Bauelemente umgesetzt würde. Dabei sei an dieser Stelle betont, daß die Verwirbelung selbstverständlich auch durch gesonderte, d.h. von der Bewegung irgendwelcher eigentlicher Teile des jeweiligen Geräts unabhängige Maßnahmen bewirkt werden kann.

Zur Lösung der genannten Aufgabe wird ferner eine Vorrichtung der eingangs genannten Art vorgeschlagen, bei welcher Mittel zur aktiven Verwirbelung des Öls in der Zone erhöhter Temperatur vorgesehen sind. Bevorzugt umfassen die Mittel zur aktiven Verwirbelung dabei mechanische Bauelemente, die im Betrieb zumindest partiell durch die Zone erhöhter Temperatur gerührt werden.

Weist das Öl enthaltende Gerät wenigstens eine partiell von Öl umströmte Gleitringdichtung mit einem Laufring und einem Festring und/oder eine zumindest partiell von Öl umströmte Achse oder Welle auf, so können an dem Laufring und/oder an der Achse oder Welle die eine Verwirbelung des Öls bewirkenden Bauelemente befestigt werden, was den Vorteil hat, daß beim Betrieb des entsprechenden Gerätes automatisch auch die Bauelemente bewegt werden und daß das Öl in der Zone, in der ohne die Bauelemente die Gefahr der Oil-Cake-Bildung bestünde, verwirbelt wird.

Weitere Einzelheiten und Vorteile der Erfindung ergeben sich aus der nachfolgenden Beschreibung zweier Ausführungsbeispiele erfindungsgemäßer Vorrichtungen in Verbindung mit der Zeichnung. Es zeigen:
- Fig. 1: einen Ausschnitt eines Öl führenden Gerätes mit einer Welle und einer Gleitringdichtung, wobei sowohl an der Gleitringdichtung als auch an der Welle erfindungsgemäße, eine Verwirbelung des Öl bewirkende Bauelemente vorgesehen sind,
- Fig. 2, 3: eine auf eine Gleitringdichtung gemäß Fig. 1 aufsetzbaren Verwirbelungsring in Drauf- und Seitenansicht und
- Fig. 4, 5: ein an einer Welle, Achse oder dergleichen gemäß Fig. 1 anbringbares Bauelement in Drauf- und Seitenansicht.

In der Fig. list ein Ausschnitt aus einem Öl führenden Gerät, z.B. einer Pumpe, gezeigt, wobei die genaue Führung des Öls hier nicht relevant und daher auch nicht gezeigt ist. In das Gehäuse 10 des Gerätes tritt eine Welle 12 ein. Das Austreten von in dem Gehäuse 10 befindlichem Öl wird mittels einer aus Festring 14 und Laufring 16 bestehenden, an sich bekannten Gleitringdichtung verhindert, wobei der Laufring 16 mittels Federn 18 auf den Festring 14 vorgespannt ist. Beim Betrieb des Gerätes dreht sich der Laufring 16mit der Welle 12 mit, wobei sich die Berührungsflächen von Laufring 16 und Festring 14 aneinander reiben. Die Reibung führt zu einer Erwärmung des im Raum 20 im Bereich der Gleitringdichtung befindlichen Öls, typischerweise auf Temperaturen von 180 bis 200°. Diese Temperaturen führten nun, wäre der Verwirbelungsring 22, auf den nachfolgend nocht eingegangen wird, nicht vorgesehen, dazu, daß das Öl im Raum 20 vercracken und feste Bestandteil ausfällen würde, die sich allmählich auch am Festring 14 und am Laufring 16 festsetzten und nach und nach sogar in die Gleitfläche zwischen Lauf- und Festring eindrängen. Dies führte dann dazu, daß die Gleitringdichtung vorzeitig verschlisse und undicht würde, so daß Öl aus dem Gehäuse 10 austreten und gegebenenfalls sogar die Umwelt schädigen könnte.

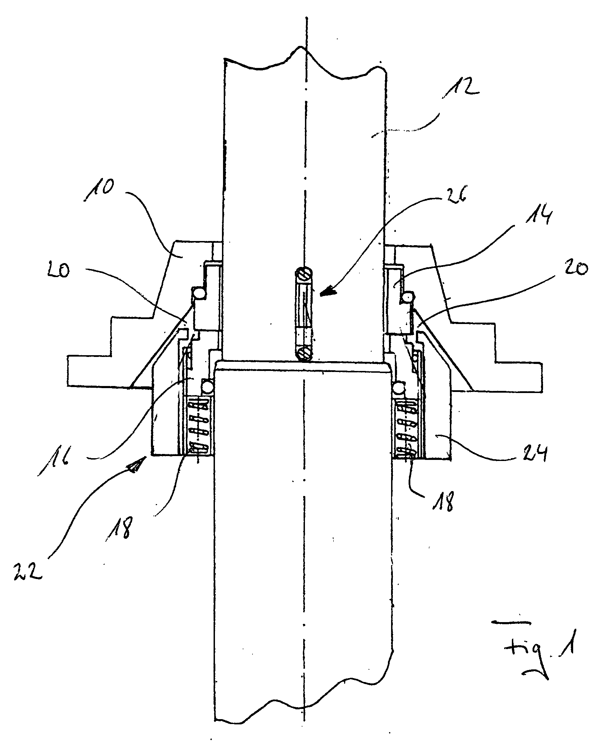

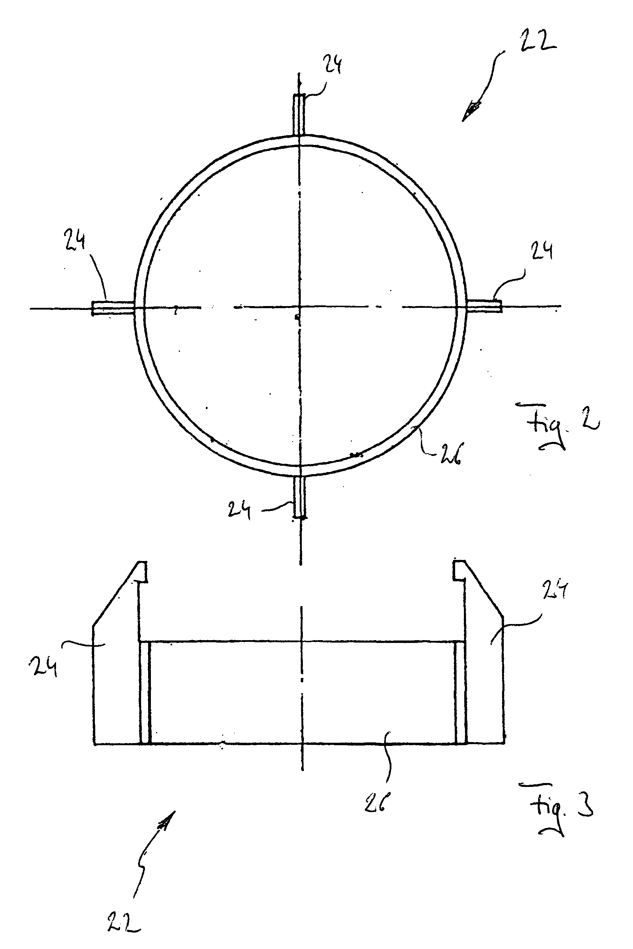

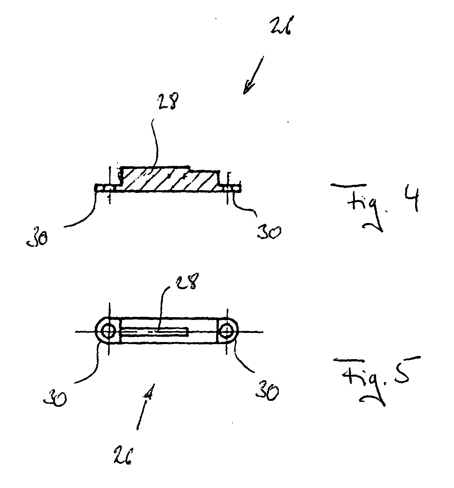

Um nun das Vercracken des Öls und die Bildung des Oil-Cake im Raum 20 zu verhindern, ist am Laufring 16 ein in seiner Gesamtheit mit 22 bezeichneter Verwirbelungsring vorgesehen, der bei diesem Ausführungsbeispiel, wie aus den Fig. 2 und 3 ersichtlich, insgesamt vier Flügel 24 aufweist, die in den Raum 20 eingreifen und beim Betrieb das dort befindliche Öl verwirbeln.

Wie in den Fig. 2 und 3 gezeigt, sind die Flügel 24 an einem Tragring 26 befestigt oder angeformt, wobei der Tragring 26 zur Befestigung des Verwirbelungsringes dient. Die Flügel 24 werden in Abhängigkeit von der Ausgestaltung des jeweiligen Gerätes, bei dem sie eingesetzt werden sollen, so ausgeformt, daß die Spalte zwischen ihnen und den feststehenden Teilen, an denen sie beim Betrieb vorbeigleiten, zwar relativ gering sind, daß jedoch ausgeschlossen ist, daß es zu Berührungen und damit zu einer ungewünschten Temperaturerhöhung durch Reibung kommen kann. Die Ausbildung der Flügel ist also nahezu beliebig. Wichtig ist, daß die Flügel so angeordnet werden, daß beim Betrieb des Verwirbelungsringes keine gewichtsbedingten Unwuchten entstehen.

Das auf der Welle 12 selbst befestigte, ebenfalls eine Verwirbelung bewirkende Bauelement 26 ist in den Fig. 4 und 5 in Seiten- bzw. Draufsicht gezeigt. Das Bauelement besteht aus einem die Verwirbelung letztendlich bewirkenden Flügelabschnitt 28 und daran angeformten Befestigungsabschnitten 30, welche eine Befestigung des Bauelementes auf der Welle 12 mittels üblicher Schrauben erlauben.

Im Rahmen des Erfindungsgedankens sind zahlreiche Abwandlungen und Weiterbildungen möglich, die sich z.B. auf die Art und Ausgestaltung der Flügel beziehen. Auch ist es möglich, wenngleich mit erhöhtem Aufwand verbunden, die Mittel zur Verwirbelung, also insbesondere den Verwirbelungsring, mit einem eigenen Antrieb zu versehen und insbesondere temperaturabhängig anzutreiben. So kann es z.B. gewünscht sein, bei Inbetriebnahme eines Gerätes, bei dem es bauartbedingt zur Oil-Cake-Bildung kommen kann, die z.B. an einer Gleitringdichtung entstehende Wärme zum Erreichen einer gewünschten Betriebstemperatur zu nutzen, so daß bei Inbetriebnahme des Gerätes die Verwirbelung abgeschaltet ist. Erfindungswesentlich ist jedenfalls, daß das Öl in der Zone, in der es herkömmlicherweise zu Oil-Cake-Bildung kommen würde, aktiv verwirbelt wird.

## Patentansprüche

1. Verfahren zur Reduzierung der Oil-Cake-Bildung bei Öl enthaltenden Geräten, bei denen sich im Öl wenigstens eine unerwünschte Zone erhöhter Temperatur ausbilden kann, ***dadurch gekennzeichnet, daß*** das Öl in der Zone erhöhter Temperatur aktiv verwirbelt wird.

2. Verfahren nach Anspruch 1, ***dadurch gekennzeichnet, daß*** zur Verwirbelung mechanische Bauelemente zumindest partiell durch die Zone erhöhter Temperatur geführt werden.

3. Verfahren nach Anspruch 1 oder 2, wobei sich die unerwünschte Zone erhöhter Temperatur im von Öl umflossenen Bereich einer Gleitringdichtung ausbilden kann, ***dadurch gekennzeichnet, daß*** die Bewegung der Gleitringdichtung direkt oder indirekt zur Verwirbelung genutzt wird.

4. Verfahren nach einem der Ansprüche 1 bis 3, wobei sich die unerwünschte Zone erhöhter Temperatur im von Öl umflossenen Bereich einer Welle oder Achse ausbilden kann, ***dadurch gekennzeichnet, daß*** die Bewegung der Achse oder Welle direkt oder indirekt zur Verwirbelung genutzt wird.

5. Vorrichtung zur Reduzierung der Oil-Cake-Bildung bei Öl enthaltenden Geräten, bei denen sich im Öl wenigstens eine unerwünschte Zone erhöhter Temperatur ausbilden kann, ***dadurch* *gekennzeichnet, daß*** Mittel zur aktiven Verwirbelung des Öls in der Zone erhöhter Temperatur vorgesehen sind.

6. Vorrichtung nach Anspruch 5, ***dadurch gekennzeichnet, daß*** die Mittel zur aktiven Verwirbelung mechanische Bauelemente umfassen, die im Betrieb zumindest partiell durch die Zone erhöhter Temperatur geführt werden.

7. Vorrichtung nach Anspruch 6, wobei das Öl enthaltende Gerät wenigstens eine partiell von Öl umströmte Gleitringdichtung mit einem Laufring und einem Festring aufweist, ***dadurch gekennzeichnet, daß*** die mechanischen Bauelemente auf dem Laufring angeordnet sind.

8. Vorrichtung nach Anspruch 7, ***dadurch gekennzeichnet, daß*** ein auf dem Gleitring fixierbarer Verwirbelungsring mit einer Anzahl von die Verwirbelung des Öls bewirkenden Vorsprüngen vorgesehen ist.

9. Vorrichtung nach einem der Ansprüche 6 bis 8, wobei das Öl enthaltende Gerät wenigstens eine zumindest partiell von Öl umströmte Achse oder Welle aufweist, ***dadurch gekennzeichnet, daß*** auf der Achse oder Welle befestigbare Bauelemente vorgesehen sind, die im Betrieb eine Verwirbelung des die Achse oder Welle umströmenden Öls bewirken.

10. Öl, insbesondere Schweröl enthaltendes Gerät, insbesondere Pumpe oder Brennstoffbehandlungsgerät mit einer Vorrichtung nach einem der Ansprüche 5 bis 9.
